# EUROPEAN PATENT APPLICATION

(11) **EP 4 509 475 A1**
(43) Date of publication of application: **19.02.2025**
(21) Application number: 24193614.5
(22) Date of filing: 08.08.2024
(51) Int. Cl.: C03C 17/00, B32B 17/10, C03C 17/36, C03C 17/42

(54) **METHODS AND COATED PRODUCTS TO REDUCE OPTICAL DISTORTION IN AUTOMOTIVE GLAZINGS**

(30) Priority: 18.08.2023 US 202363533542 P; 02.08.2024 US 202418793422
(71) Applicant: Vitro Automotive Holdings Corporation, Cheswick, PA 15024 (US)
(72) Inventor: Dishart, Peter T., Chewick, 15024 (US); Casci, Erin A., Cheswick, 15024 (US)
(74) Representative: f & e patent

(57) **Abstract**

A method includes providing a first ply having a No. 1 surface and No. 2 surface. The method further includes heating the first ply, bending the first ply into a predetermined shape, providing a second ply having a No. 3 surface and No. 4 surface, and painting at least a portion of the No. 2 surface, No. 3 surface, or No. 4 surface to yield a painted portion. The method further includes applying a burn-off temporary layer over at least a portion of the painted portion, heating the second ply, bending the second ply into the predetermined shape, burning-off the burn-off temporary layer, providing an interlayer in between the first ply and second ply, heating and squeezing the first ply, second ply and interlayer together under a vacuum to remove any air trapped between the first ply and the second ply thereby forming the article, and cooling the article.

## Description

### CROSS-REFERENCE TO RELATED APPLICATIONS

This application claims priority to U.S. Utility Patent Application Number 18/793,422, filed August 2, 2024, and claims the benefit of U.S. Provisional Patent Application Number 63/533,542, filed August 18, 2023, the disclosures of which are hereby incorporated by reference in their entireties.

### BACKGROUND

### Field

The present application relates generally to glass articles and, more specifically, to automotive glass articles.

### Technical Considerations

Automotive glass articles, particularly windshields, sidelights, and rear windows commonly have coated or painted portions, such as a third visor. The coated or painted portions oftentimes heat at a different rate than the other materials used in the automotive glass articles, and thus commonly result in optical distortion to the glass during exposure to high temperatures during the manufacturing processes.

Accordingly, those skilled in the art continue research and development in the field of reducing optical distortion in glass articles, and more particularly, to automotive glass articles.

### SUMMARY

Disclosed are methods for reducing optical distortion in articles.

In one example, the method includes providing a first ply having a No. 1 surface and a No. 2 surface. The method further includes heating the first ply, bending the first ply into a predetermined shape, providing a second ply having a No. 3 surface and a No. 4 surface, and painting at least a portion of the No. 2 surface, the No. 3 surface, or the No. 4 surface to yield a painted portion. The method further includes applying a burn-off temporary layer over at least a portion of the painted portion, heating the second ply, bending the second ply into the predetermined shape, burning-off the burn-off temporary layer, providing an interlayer in between the first ply and second ply, heating and squeezing the first ply, the second ply and the interlayer together under a vacuum to remove any air trapped between the first ply and the second ply thereby forming the article, and cooling the article.

Also disclosed is a method for reducing optional distortion in an automotive glass article.

In one example, the method includes providing a first ply having a No. 1 surface and a No. 2 surface, heating the first ply, and bending the first ply into a predetermined shape. The method further includes providing a second ply having a No. 3 surface and a No. 4 surface, applying a burn-off mask over at least a portion of the No. 2 surface, the No. 3 surface, or the No. 4 surface, applying a functional coating over the burn-off mask, applying a burn-off temporary layer over the functional coating, heating the second ply, bending the second ply into the predetermined shape, and burning-off the burn-off temporary layer. The method further includes providing an interlayer in between the first ply and second ply, heating and squeezing the first ply, the second ply and the interlayer together under a vacuum to remove any air trapped between the first ply and the second ply thereby forming the automotive glass article, and cooling the automotive glass article.

Also disclosed is an automotive glass article.

In one example, the automotive glass article includes a first planar substrate having a No. 1 surface and a No. 2 surface. The automotive glass article further includes a second planar substrate coupled to the No. 2 surface of the first planar substrate, the second planar substrate having a No. 3 surface and a No. 4 surface. The automotive glass article further includes a painted portion positioned over a portion of one or more of the No. 2 surface, the No. 3 surface, and the No. 4 surface. The automotive glass article further includes a burn-off temporary layer positioned over at least a portion of one or more of the No. 2 surface, the No. 3 surface, and the No. 4 surface and at least a portion of the painted portion.

Also disclosed is a method for reducing optical distortion in an automotive glass article.

In one example, the method includes providing a first ply having a first surface and a second surface, painting at least a portion of the first surface or the second surface to yield a painted portion, applying a burn-off temporary layer over at least a portion of the painted portion, heating the first ply, bending the first ply into the predetermined shape, and burning-off the burn-off temporary layer.

Also disclosed is a method for forming a windshield.

In one example, the method includes providing a first ply having a No. 1 surface and a No. 2 surface, providing a second ply having a No. 3 surface and a No. 4 surface, painting at least a portion of the No. 2 surface, the No. 3 surface, or the No. 4 surface to yield a painted portion, applying a burn-off temporary layer over at least a portion of the painted portion, positioning the No. 2 surface of the first ply against the No. 3 surface of the second ply to yield a stacked structure, heating the stacked structure, bending the stacked structure into a predetermined shape thereby forming an article, and cooling the article.

Other examples will become apparent from the following detailed description, the accompanying drawings, and the appended claims.

### BRIEF DESCRIPTION OF THE DRAWINGS

The disclosure will be described with reference to the following drawing figures wherein like reference numbers identify like parts throughout.
FIG. 1 is a flow chart of a method for reducing optical distortion in articles;
FIG. 2 is a flow chart of a method for reducing optical distortion in automotive glass articles;
FIG. 3 is a flow chart of a method for reducing optical distortion in automotive articles;
FIG. 4 is a front cross-sectional schematic (not to scale) of a glass article;
FIG. 5 is a front cross-sectional schematic (not to scale) of an automotive glass article; and
FIG. 6 is a front cross-sectional schematic (not to scale) of an automotive article.

### DETAILED DESCRIPTION

As used herein, spatial or directional terms, such as "left", "right", "inner", "outer", "above", "below", and the like, relate to the disclosure as it is shown in the drawing figures. However, it is to be understood that the disclosure can assume various alternative orientations and, accordingly, such terms are not to be considered as limiting. Further, as used herein, all numbers expressing dimensions, physical characteristics, processing parameters, quantities of ingredients, reaction conditions, and the like, used in the specification and claims are to be understood as being modified in all instances by the term "approximately" or "about". Accordingly, unless indicated to the contrary, the numerical values set forth in the following specification and claims may vary depending upon the desired properties sought to be obtained by the present disclosure. At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 3.3, 4.7 to 7.5, 5.5 to 10, and the like. "A" or "an" refers to one or more.

As used herein, "coupled", "coupling", and similar terms refer to two or more elements that are joined, linked, fastened, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations.

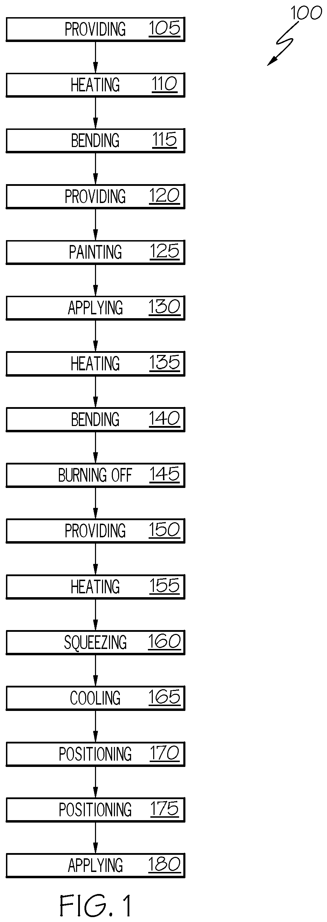

Referring to FIG. 1, disclosed is a method 100 for reducing optical distortion in an article 400. Optical distortion may be reduced by evenly heating the article 400. The article 400 may be evenly heated by applying one or more burn-off coating over at least a portion of the article 400, such as a painted portion, to reduce differences in heating across painted and non-painted surfaces of the article 400. In one example, the optical distortion may be characterized in reduction on millidiopters.

In one example, the method 100 includes providing 105 a first ply 410 having a No. 1 surface 412 and a No. 2 surface 414. The first ply 410 may be comprised of any suitable material, such as a glass or polymeric material. In one example, the first ply 410 is comprised of tempered glass.

Still referring to FIG. 1, the method 100 includes heating 110 the first ply 410. The heating 110 may be done at any suitable temperature for changing the shape of the first fly 410 without comprising material and optical properties. In one example, the heating 110 is performed at a temperature of about 550°C to about 700°C.

Still referring to FIG. 1, the method 100 includes bending 115 the first ply 410 into a predetermined shape. In one example, the bending 115 occurs after the heating 110. In another example, the bending 115 occurs concurrently with the heating 110. The bending 115 may be done in such a manner than the first ply 410 is initially generally planar and after the bending 115 is in a predetermined shape having a curvature.

In one or more examples, the method 100 includes providing 120 a second ply 420 having a No. 3 surface 422 and a No. 4 surface 424. The second ply 420 may be of the same composition as the first ply 410, such as a glass or a polymeric material. The second ply 420 may be generally planar and have substantially the same size as the first ply 410.

Still referring to FIG. 1, the method 100 includes painting 125 at least a portion of one or more of the No. 2 surface 414, the No. 3 surface 422, or the No. 4 surface 424 to yield a painted portion 430. In one example, the painting 125 includes painting at least a portion of one or more of the No. 2 surface 414 and the No. 4 surface 424. In another example, the painting 125 includes painting at least a portion of both of the No. 2 surface 414 and the No. 4 surface 424.

In one or more examples, the method 100 includes applying 130 a burn-off temporary layer 440 over at least a portion of the painted portion 430. The burn-off temporary layer 440 may help with even heating across one or more of the first ply 410 and the second ply 420 of the article 400 to reduce optical distortion during forming. The burn-off temporary layer 440 may be provided at any thickness needed to evenly heat the first ply 410 and the second ply 420. In one example, the burn-off temporary layer 440 comprises a thickness of at least 10 nm and at most 5,000 µm.

The burn-off temporary layer 440 may be comprised of one or more compositions. In one example, the burn-off temporary layer 440 comprises one or more of a wax, an organic oil, a (meth)acrylate, a polyolefin, a polyester, a polycarbonate, a polyether, and a combination thereof. In another example, the burn-off temporary layer 440 comprises one or more of polylactic acid (PLA), polyethylene carbonate (PEC), polypropylene carbonate (PPC), polycaprolactone, polyoxymethylene, polyethylene, polypropylene, an aqueous polyurethane, a polyurethane formed from a two component system, an epoxy functional polymeric material, and a combination thereof. In another example, the burn-off temporary layer 440 comprises one or more of plasticizers, crosslinkers, viscosity modifiers, corrosion inhibitors, infrared (IR) absorbers, adhesion modifiers, UV absorbers, pigments, surfactants, hydrophobic agents, and a combination thereof.

Still referring to FIG. 1, the method 100 includes heating 135 the second ply 420. In one example, the heating 135 the second ply 420 is performed at a temperature of about 550°C to about 700°C. The method 100 further includes bending 140 the second ply 420 into the predetermined shape. In one example, the predetermined shape is substantially aligned with the predetermined shape of the first ply 410. The bending 140 the second ply 420 may occur after the heating 135 of the second ply 420 or concurrently with the heating 135 the second ply 420.

Still referring to FIG. 1, in one or more examples, the method 100 includes burning-off 145 the burn-off temporary layer 440. The burning-off 145 the burn-off temporary layer 440 may occur concurrently with the heating 135 or after the heating 135 and bending 140. The burning-off 145 may be performed at a temperature of at most 1000°C without substantial damage to the second ply 420.

In one or more examples, the method 100 includes providing 150 an interlayer 450 in between the first ply 410 and second ply 420. The interlayer 450 may be a polymeric material, such as polyurethane, ethylene vinyl acetate, or polyvinyl butyral.

Still referring to FIG. 1, the method 100 includes heating 155 and squeezing 160 the first ply 410, the second ply 420, and the interlayer 450 together under a vacuum to remove any air trapped between the first ply 410 and the second ply 420 thereby forming the article 400. After the heating 155 and squeezing 160, the method 100 includes cooling 165 the article 400.

In one or more examples, the method 100 further includes positioning 170 a mask 470 over at least a portion of one of the No. 2 surface 414, the No. 3 surface 422, and the No. 4 surface 424, positioning 175 a functional coating 460 over the mask 470, and applying 180 a second burn-off temporary layer 442 over the functional coating 460. In one example, the mask is a burn-off mask 472 as described herein. In another example, the mask is a traditional mask 474.

The method 100 may be performed in under conditions such that any of the heating steps do not cause a surface of the article 400 to have a color change (DECMC) of more than 3 units compared to a color of the surface before the heating.

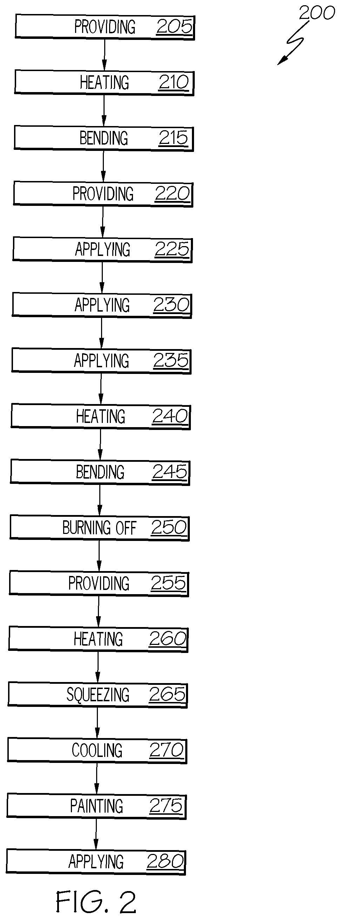

The methodology may further be defined by disclosed method 200. Referring to FIG. 2, disclosed is the method 200 for reducing optional distortion in an automotive glass article 500. The method 20 includes providing 205 a first ply 410 having a No. 1 surface 412 and a No. 2 surface 414.

Still referring to FIG. 2, the method 200 further includes heating 210 the first ply 410. The heating 210 may be done at any suitable temperature for changing the shape of the first fly 410 without comprising material and optical properties. In one example, the heating 210 is performed at a temperature of about 550°C to about 700°C.

Still referring to FIG. 2, the method 200 includes bending 215 the first ply 410 into a predetermined shape. In one example, the bending 215 occurs after the heating 210. In another example, the bending 215 occurs concurrently with the heating 210. The bending 215 may be done in such a manner than the first ply 410 is initially generally planar and after the bending 215 is in a predetermined shape having a curvature.

Still referring to FIG. 2, the method 200 includes providing 220 a second ply 420 having a No. 3 surface 422 and a No. 4 surface 424. The second ply 420 may be of the same composition as the first ply 410, such as a glass or a polymeric material. The second ply 420 may be generally planar and have substantially the same size as the first ply 410.

Still referring to FIG. 2, the method 200 includes applying 225 a burn-off mask 472 over at least a portion of the No. 2 surface 414, the No. 3 surface 422, or the No. 4 surface 424. The method 200 may further include applying 230 a functional coating 460 over the burn-off mask 472.

Still referring to FIG. 2, the method 200 includes applying 235 a burn-off temporary layer 440 over the functional coating 460. The burn-off temporary layer 440 may help with even heating across one or more of the first ply 410 and the second ply 420 of the article 400 to reduce optical distortion during forming. The burn-off temporary layer 440 may be provided at any thickness needed to evenly heat the first ply 410 and the second ply 420. In one example, the burn-off temporary layer 440 comprises a thickness of at least 10 nm and at most 5,000 µm.

The burn-off temporary layer 440 may be comprised of one or more compositions. In one example, the burn-off temporary layer 440 comprises one or more of a wax, an organic oil, a (meth)acrylate, a polyolefin, a polyester, a polycarbonate, a polyether, and a combination thereof. In another example, the burn-off temporary layer 440 comprises one or more of polylactic acid (PLA), polyethylene carbonate (PEC), polypropylene carbonate (PPC), polycaprolactone, polyoxymethylene, polyethylene, polypropylene, an aqueous polyurethane, a polyurethane formed from a two component system, an epoxy functional polymeric material, and a combination thereof. In another example, the burn-off temporary layer 440 comprises one or more of plasticizers, crosslinkers, viscosity modifiers, corrosion inhibitors, infrared (IR) absorbers, adhesion modifiers, UV absorbers, pigments, surfactants, hydrophobic agents, and a combination thereof.

Still referring to FIG. 2, the method 200 includes heating 240 the second ply 420. In one example, the heating 240 the second ply 420 is performed at a temperature of about 550°C to about 700°C. The method 200 further includes bending 245 the second ply 420 into the predetermined shape. In one example, the predetermined shape is substantially aligned with the predetermined shape of the first ply 410. The bending 245 the second ply 420 may occur after the heating 240 of the second ply 420 or concurrently with the heating 240 the second ply 420.

Still referring to FIG. 2, the method 200 includes burning-off 250 the burn-off temporary layer 440. The burning-off 250 the burn-off temporary layer 440 may occur concurrently with the heating 135 or after the heating 240 and bending 245. The burning-off 145 may be performed at a temperature of at most 1000°C without substantial damage to the second ply 420.

Still referring to FIG. 2, the method 200 includes providing 255 an interlayer 450 between the first ply 410 and second ply 420. The interlayer 450 may be a polymeric material, such as polyurethane, ethylene vinyl acetate, or polyvinyl butyral.

Still referring to FIG. 2, the method 200 includes heating 260 and squeezing 265 the first ply 410, the second ply 420 and the interlayer 450 together under a vacuum to remove any air trapped between the first ply 410 and the second ply 420 thereby forming the automotive glass article 400. After the heating 260 and squeezing 265, the method 200 includes cooling 270 the automotive glass article 500.

The method 200 may further include painting 275 at least a portion of the No. 4 surface 424 to yield a painted portion 430 and applying 280 a second burn-off temporary layer 442 over at least a portion of the No. 4 surface 424 and at least a portion of the painted portion 430.

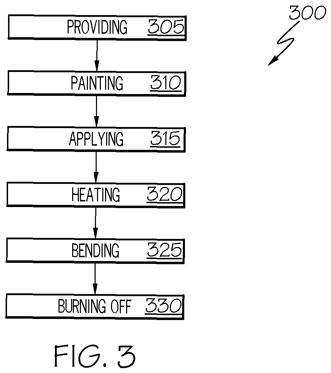

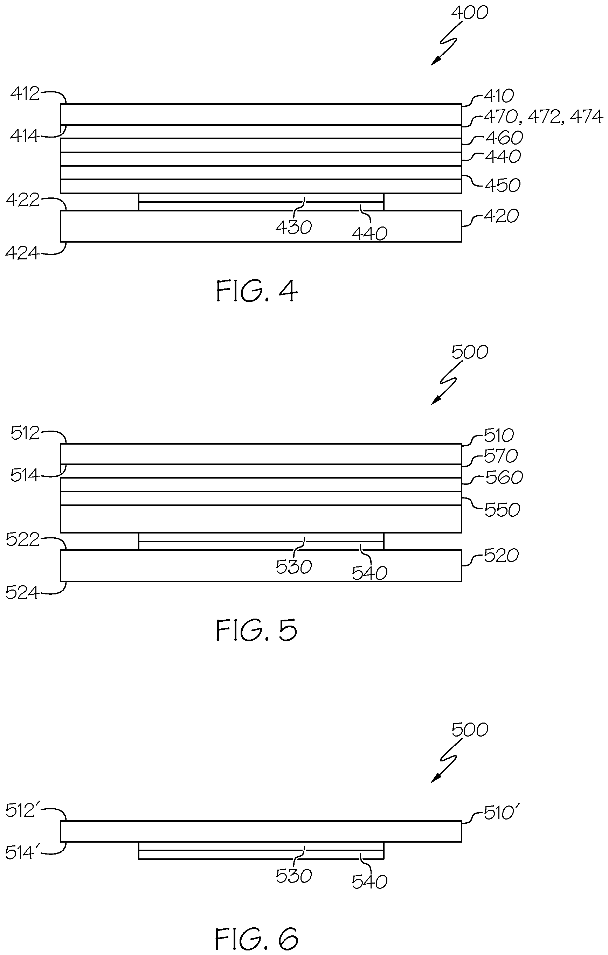

The methodology may further be defined by a disclosed method 300 for reducing optical distortion in an automotive glass article 500 as shown in FIG. 3 and FIG. 6. In an example, the method 300 includes providing 305 a first ply 510' having a first surface 512', such as a No. 1 surface 512, and a second surface 514', such as a No. 2 surface 514. The method 300 further includes painting 310 at least a portion of the first surface 512' or the second surface 514' to yield a painted portion 530, and applying 315 a burn-off temporary layer 540 over at least a portion of the painted portion 530.

In one example, the burn-off temporary layer 540 includes one or more of a wax, an organic oil, a (meth)acrylate, a polyolefin, a polyester, a polycarbonate, a polyether, and a combination thereof. In another example, the burn-off temporary layer 540 comprises one or more of polylactic acid (PLA), polyethylene carbonate (PEC), polypropylene carbonate (PPC), polycaprolactone, polyoxymethylene, polyethylene, polypropylene, an aqueous polyurethane, a polyurethane formed from a two component system, an epoxy functional polymeric material, and a combination thereof. In yet another example, the burn-off temporary layer 540 comprises one or more of plasticizers, crosslinkers, viscosity modifiers, corrosion inhibitors, infrared (IR) absorbers, adhesion modifiers, UV absorbers, pigments, surfactants, hydrophobic agents, and a combination thereof. The burn-off temporary layer 540 may have a thickness of at least about 10 nm and at most about 5,000 µm.

Still referring to FIG. 3, the method 300 includes heating 320 the first ply 510'. In one example, the heating 320 is performed at a temperature of 550°C to 700°C. The method 300 further includes bending 325 the first ply 510' into the predetermined shape and burning-off 330 the burn-off temporary layer 540.

The method 300 may be performed such that any of the heating steps do not cause any of the surfaces to have a color change (DECMC) of more than 3 units compared to a color of the coated surface before the heating.

The methodology may further be defined by a disclosed method for forming a windshield. The method may include a single process, where each ply is individually bent, or a doublet process, where the plies are bent together.

In one example, the method includes providing a first ply having a No. 1 surface and a No. 2 surface and providing a second ply having a No. 3 surface and a No. 4 surface. The method further includes painting at least a portion of the No. 2 surface, the No. 3 surface, or the No. 4 surface to yield a painted portion, followed by applying a burn-off temporary layer over at least a portion of the painted portion.

In one or more examples, the method further includes positioning the No. 2 surface of the first ply against the No. 3 surface of the second ply to yield a stacked structure. The method further includes heating the stacked structure. The method further includes bending the stacked structure into a predetermined shape thereby forming an article. Further, the method includes cooling the article.

In one example, the method further includes burning-off the burn-off temporary layer. The burning-off the burn-off temporary layer may occur concurrently with the heating. The method may further include providing an interlayer in between the first ply and second ply. In the case of a doublet process, the interlayer is provided after the bending of the plies occurs. After placement of the interlayer, the method may further include squeezing the first ply, the second ply and the interlayer together under a vacuum to remove any air trapped between the first ply and the second ply, such as in an autoclave.

Referring to FIG. 4, in one or more examples, disclosed is an article 400. In one example, the article 400 is an automotive glass article 500, such as a windshield or a sidelight. The article 400 may have a thickness of about 0.25 mm to about 1.0 mm.

The article 400 includes a first ply 410 having a No. 1 surface 412 and a No. 2 surface 414. The first ply 410 may be comprised of any suitable material, such as a glass or polymeric material. In one example, the first ply 410 is comprised of tempered glass.

The article 400 may further include a second ply 420 having a No. 3 surface 422 and a No. 4 surface 424. The second ply 420 may be of the same composition as the first ply 410, such as a glass or a polymeric material. The second ply 420 may be generally planar and have substantially the same size as the first ply 410.

The article 400 may further include a painted portion 430. The painted portion 430 may be located on one or more of the No. 2 surface 414, No. 3 surface 422, and the No. 4 surface 424. In one example, the painted portion defines a sunshade of a windshield. In another example, the painted portion defines a third visor of a windshield.

The article 400 may further include a burn-off temporary layer 440. In one example, the burn-off temporary layer 440 is positioned over at least a portion of one or more of the No. 2 surface 414, the No. 3 surface 422, and the No. 4 surface 424 and at least a portion of the painted portion 430.

Referring to FIG. 4, in one or more examples, the article 400 further includes an interlayer 450 positioned between the first ply 410 and second ply 420. The interlayer 450 may be a polymeric material, such as polyurethane, ethylene vinyl acetate, or polyvinyl butyral.

In one or more examples, article 400 may further include a functional coating 460. The functional coating 460 may be positioned on the No. 2 surface 414 or the No. 3 surface 422. In another example, the functional coating 460 is positioned between the surface and a second burn-off temporary layer 442. The functional coating 460 may be a ceramic enamel. In another example, the functional coating 460 may comprise a low-E coating layer. In yet another example, the functional coating 460 may include an infrared reflective coating.

Referring to FIG. 4, the article 400 may further include a burn-off mask 472 positioned between the No. 2 surface 414 or the No. 3 surface 422, and the functional coating 460.

Referring to FIG. 5, also disclosed is an automotive glass article 500. The automotive glass article 500 has a thickness of about 0.25 mm to about 1.0 mm. in one example, the automotive glass article 500 is a windshield. In another example, the automotive glass article 500 is a sidelight. In yet another example, the automotive glass article 500 is a tempered rear window.

In one or more examples, the automotive glass article 500 includes a first planar substrate 510 having a No. 1 surface 512 and a No. 2 surface 514. The automotive glass article 500 further includes a second planar substrate 520 coupled to the No. 2 surface 514 of the first planar substrate 510, the second planar substrate 520 having a No. 3 surface 522 and a No. 4 surface 524. In one example, the first planar substrate 510 is compositionally the same as the second planar substrate 520. The first planar substrate 510 and the second planar substrate 520 may be one or more of a glass and a polymeric material.

Still referring to FIG. 5, the automotive glass article 500 includes a painted portion 530 positioned over a portion of one or more of the No. 2 surface 514, the No. 3 surface 522, and the No. 4 surface 524. In one example, the painted portion 530 is positioned over a portion of the No. 4 surface, and wherein the burn-off temporary layer 540 is positioned over a portion of the No. 4 surface and at least a portion of the painted portion.

The automotive glass article 500 further includes a burn-off temporary 540 layer positioned over at least a portion of one or more of the No. 2 surface 514, the No. 3 surface 522, and the No. 4 surface 524 and at least a portion of the painted portion 530. In one example, the burn-off temporary layer 540 comprises one or more of a wax, an organic oil, a (meth)acrylate, a polyolefin, a polyester, a polycarbonate, a polyether, and a combination thereof. In another example, the burn-off temporary layer 540 comprises one or more of polylactic acid (PLA), polyethylene carbonate (PEC), polypropylene carbonate (PPC), polycaprolactone, polyoxymethylene, polyethylene, polypropylene, an aqueous polyurethane, a polyurethane formed from a two component system, an epoxy functional polymeric material, and a combination thereof. In yet another example, the burn-off temporary layer 540 comprises one or more of plasticizers, crosslinkers, viscosity modifiers, corrosion inhibitors, infrared (IR) absorbers, adhesion modifiers, UV absorbers, pigments, surfactants, hydrophobic agents, and a combination thereof.

The burn-off temporary layer 540 may have a thickness of at least about 10 nm and at most about 5,000 µm. The burn-off temporary layer 540 may be removable by a heat treatment process of at most 1000°C without substantial damage to any of the surfaces upon which the burn-off temporary layer 540 is located.

Still referring to FIG. 5, the automotive glass article 500 includes a burn-off mask 550 positioned over at least a portion of the No. 2 surface 514 and No. 3 surface 522. The automotive glass article 500 may further include a functional coating 560. In one example, the functional coating 560 comprises a low-E coating layer. In another example, the functional coating 560 comprises an infrared reflective coating. The functional coating 560 may be positioned between the surface and the burn-off temporary layer.

Still referring to FIG. 5, the automotive glass article 500 may further include a burn-off mask 550 positioned between a portion of the surface upon which it is located and a portion of the functional coating 560.

In another example, as shown in FIG. 5, the automotive glass article 500 may be defined as having a first planar substrate 510 having a No. 1 surface 512 and a No. 2 surface 514 and a second planar substrate 520 coupled to the No. 2 surface 514 of the first planar substrate 510, the second planar substrate 520 having a No. 3 surface 522 and a No. 4 surface 524. The automotive glass article 500 further includes a burn-off mask 550 positioned over at least a portion of the No. 2 surface 514 or the No. 3 surface 522.

The automotive glass article 500 further includes a functional coating 560 positioned over the burn-off mask 550 and a burn-off temporary layer 540 positioned over the functional coating 560. The automotive glass article 500 may further include a painted portion 530 positioned over a portion the No. 4 surface 524 and a burn-off temporary layer 540 positioned over at least a portion of the No. 4 surface 524 and at least a portion of the painted portion 530. In one example, the automotive glass article 500 further includes a second burn-off mask 552 positioned between the No. 4 surface 524 and the painted portion 530.

This disclosure is further described in the following numbered clauses:
Clause 1. A method for reducing optical distortion in an article comprising: providing a first ply having a No. 1 surface and a No. 2 surface; heating the first ply; bending the first ply into a predetermined shape; providing a second ply having a No. 3 surface and a No. 4 surface; painting at least a portion of the No. 2 surface, the No. 3 surface, or the No. 4 surface to yield a painted portion; applying a burn-off temporary layer over at least a portion of the painted portion; heating the second ply; bending the second ply into the predetermined shape; burning-off the burn-off temporary layer; providing an interlayer in between the first ply and second ply; heating and squeezing the first ply, the second ply and the interlayer together under a vacuum to remove any air trapped between the first ply and the second ply thereby forming the article; and cooling the article.
Clause 2. The method of clause 1, wherein the heating is performed at a temperature of 550°C to 700°C.
Clause 3. The method of clause 1, wherein any of the heating steps do not cause the surface to have a color change (DECMC) of more than 3 units compared to a color of the surface before the heating.
Clause 4. The method of clause 1, wherein the burn-off temporary layer comprises one or more of a wax, an organic oil, a (meth)acrylate, a polyolefin, a polyester, a polycarbonate, a polyether, and a combination thereof.
Clause 5. The method of clause 1, wherein the burn-off temporary layer comprises one or more of polylactic acid (PLA), polyethylene carbonate (PEC), polypropylene carbonate (PPC), polycaprolactone, polyoxymethylene, polyethylene, polypropylene, an aqueous polyurethane, a polyurethane formed from a two component system, an epoxy functional polymeric material, and a combination thereof.
Clause 6. The method of clause 1, wherein the burn-off temporary layer comprises one or more of plasticizers, crosslinkers, viscosity modifiers, corrosion inhibitors, infrared (IR) absorbers, adhesion modifiers, UV absorbers, pigments, surfactants, hydrophobic agents, and a combination thereof.
Clause 7. The method of clause 1, wherein the burn-off temporary layer comprises a thickness of at least 10 nm and at most 5,000 µm.
Clause 8. The method of clause 1, wherein the burning-off step is performed at a temperature of at most 1000°C without substantial damage to the second ply.
Clause 9. The method of clause 1, wherein the article further comprises a functional coating positioned on the No. 2 surface or the No. 3 surface.
Clause 10. The method of clause 9, wherein the functional coating comprises a low-E coating layer.
Clause 11. The method of clause 9, wherein the functional coating comprises an infrared reflective coating.
Clause 12. The method of clause 9, wherein the functional coating is positioned between the surface and a second burn-off temporary layer.
Clause 13. The method of clause 9, wherein the article comprises a burn-off mask positioned between the No. 2 surface or the No. 3 surface, and the functional coating.
Clause 14. The method of clause 1, wherein the article has a thickness of about 0.25 mm to about 1.0 mm.
Clause 15. The method of clause 1, wherein the article is a windshield.
Clause 16. The method of clause 1, wherein the article is a sidelight.
Clause 17. The method of clause 1, further comprising: positioning a mask over at least a portion of one of the No. 2 surface, the No. 3 surface, and the No. 4 surface; positioning a functional coating over the mask; and applying a second burn-off temporary layer over the functional coating.
Clause 18. The method of clause 17, wherein the mask is a burn-off mask.
Clause 19. The method of clause 17, wherein the mask is a traditional mask.
Clause 20. A method for reducing optional distortion in an automotive glass article comprising: providing a first ply having a No. 1 surface and a No. 2 surface; heating the first ply; bending the first ply into a predetermined shape; providing a second ply having a No. 3 surface and a No. 4 surface; applying a burn-off mask over at least a portion of the No. 2 surface, the No. 3 surface, or the No. 4 surface; applying a functional coating over the burn-off mask; applying a burn-off temporary layer over the functional coating; heating the second ply; bending the second ply into the predetermined shape; burning-off the burn-off temporary layer; providing an interlayer in between the first ply and second ply; heating and squeezing the first ply, the second ply and the interlayer together under a vacuum to remove any air trapped between the first ply and the second ply thereby forming the automotive glass article; and cooling the automotive glass article.
Clause 21. The method of clause 20, further comprising: painting at least a portion of the No. 4 surface to yield a painted portion; applying a second burn-off temporary layer over at least a portion of the No. 4 surface and at least a portion of the painted portion
Clause 22. An automotive glass article comprising: a first planar substrate having a No. 1 surface and a No. 2 surface; a second planar substrate coupled to the No. 2 surface of the first planar substrate, the second planar substrate having a No. 3 surface and a No. 4 surface; a painted portion positioned over a portion of one or more of the No. 2 surface, the No. 3 surface, and the No. 4 surface; and a burn-off temporary layer positioned over at least a portion of one or more of the No. 2 surface, the No. 3 surface, and the No. 4 surface and at least a portion of the painted portion.
Clause 23. The automotive glass article of clause 22, wherein the painted portion is positioned over a portion of the No. 4 surface, and wherein the burn-off temporary layer is positioned over a portion of the No. 4 surface and at least a portion of the painted portion.
Clause 24. The automotive glass article of clause 22, further comprising a burn-off mask positioned over at least a portion of the No. 2 No. 3 surface.
Clause 25. The automotive glass article of clause 22, wherein the burn-off temporary layer comprises one or more of a wax, an organic oil, a (meth)acrylate, a polyolefin, a polyester, a polycarbonate, a polyether, and a combination thereof.
Clause 26. The automotive glass article of clause 22, wherein the burn-off temporary layer comprises one or more of polylactic acid (PLA), polyethylene carbonate (PEC), polypropylene carbonate (PPC), polycaprolactone, polyoxymethylene, polyethylene, polypropylene, an aqueous polyurethane, a polyurethane formed from a two component system, an epoxy functional polymeric material, and a combination thereof.
Clause 27. The automotive glass article of clause 22, wherein the burn-off temporary layer comprises one or more of plasticizers, crosslinkers, viscosity modifiers, corrosion inhibitors, infrared (IR) absorbers, adhesion modifiers, UV absorbers, pigments, surfactants, hydrophobic agents, and a combination thereof.
Clause 28. The automotive glass article of clause 22, wherein the burn-off temporary layer comprises a thickness of at least 10 nm and at most 5,000 µm.
Clause 29. The automotive glass article of clause 22, wherein the burn-off temporary layer is removable by a heat treatment process of at most 1000°C without substantial damage to the surface.
Clause 30. The automotive glass article of clause 22, wherein the automotive glass article further comprises a functional coating.
Clause 31. The automotive glass article of clause 30, wherein the functional coating comprises a low-E coating layer.
Clause 32. The automotive glass article of clause 30, wherein the functional coating comprises an infrared reflective coating.
Clause 33. The automotive glass article of clause 30, wherein the functional coating is positioned between the surface and the burn-off temporary layer.
Clause 34. The automotive glass article of clause 30, further comprising a burn-off mask positioned between a portion of the surface and a portion of the functional coating.
Clause 35. The automotive glass article of clause 22, wherein the automotive glass article has a thickness of about 0.25 mm to about 1.0 mm.
Clause 36. The automotive glass article of clause 22, wherein the automotive glass article is a windshield.
Clause 37. The automotive glass article of clause 22, wherein the automotive glass article is a sidelight.
Clause 38. The automotive glass article of clause 22, wherein the painted portion defines a sunshade of a windshield.
Clause 39. The automotive glass article of clause 22, wherein the painted portion defines a third visor of a windshield.
Clause 40. An automotive glass article comprising: a first planar substrate having a No. 1 surface and a No. 2 surface; a second planar substrate coupled to the No. 2 surface of the first planar substrate, the second planar substrate having a No. 3 surface and a No. 4 surface; a burn-off mask positioned over at least a portion of the No. 2 surface or the No. 3 surface; a functional coating positioned over the burn-off mask; and a burn-off temporary layer positioned over the functional coating.
Clause 41. The automotive glass of clause 40, further comprising: a painted portion positioned over a portion the No. 4 surface; and a burn-off temporary layer positioned over at least a portion of the No. 4 surface and at least a portion of the painted portion.
Clause 42. The automotive glass of clause 41, further comprising a second burn-off mask positioned between the No. 4 surface and the painted portion.
Clause 43. A method for reducing optical distortion in an automotive glass article comprising: providing a first ply having a first surface and a second surface; painting at least a portion of the first surface or the second surface to yield a painted portion; applying a burn-off temporary layer over at least a portion of the painted portion; heating the first ply; bending the first ply into the predetermined shape; and burning-off the burn-off temporary layer.
Clause 44. The method of clause 43, wherein the heating is performed at a temperature of 550°C to 700°C.
Clause 45. The method of clause 43, wherein any of the heating steps do not cause the surface to have a color change (DECMC) of more than 3 units compared to a color of the surface before the heating.
Clause 46. The method of clause 43, wherein the burn-off temporary layer comprises one or more of a wax, an organic oil, a (meth)acrylate, a polyolefin, a polyester, a polycarbonate, a polyether, and a combination thereof.
Clause 47. The method of clause 43, wherein the burn-off temporary layer comprises one or more of polylactic acid (PLA), polyethylene carbonate (PEC), polypropylene carbonate (PPC), polycaprolactone, polyoxymethylene, polyethylene, polypropylene, an aqueous polyurethane, a polyurethane formed from a two component system, an epoxy functional polymeric material, and a combination thereof.
Clause 48. The method of clause 1, wherein the burn-off temporary layer comprises one or more of plasticizers, crosslinkers, viscosity modifiers, corrosion inhibitors, infrared (IR) absorbers, adhesion modifiers, UV absorbers, pigments, surfactants, hydrophobic agents, and a combination thereof.
Clause 49. The method of clause 43, wherein the burn-off temporary layer comprises a thickness of at least 10 nm and at most 5,000 µm.
Clause 50. A method for forming a windshield comprising: providing a first ply having a No. 1 surface and a No. 2 surface; providing a second ply having a No. 3 surface and a No. 4 surface; painting at least a portion of the No. 2 surface, the No. 3 surface, or the No. 4 surface to yield a painted portion; applying a burn-off temporary layer over at least a portion of the painted portion; positioning the No. 2 surface of the first ply against the No. 3 surface of the second ply to yield a stacked structure; heating the stacked structure; bending the stacked structure into a predetermined shape thereby forming an article; and cooling the article.
Clause 51. The method of clause 50, further comprising burning-off the burn-off temporary layer.
Clause 52. The method of clause 50, further comprising providing an interlayer in between the first ply and second ply.
Clause 53. The method of clause 50, further comprising squeezing the first ply, the second ply and the interlayer together under a vacuum to remove any air trapped between the first ply and the second ply.

It will be readily appreciated by those skilled in the art that modifications may be made to the disclosure without departing from the concepts disclosed in the foregoing description. Accordingly, the particular examples described in detail herein are illustrative only and are not limiting to the scope of the disclosure, which is to be given the full breadth of the appended claims and any and all equivalents thereof.

## Claims

1. A method for reducing optical distortion in an article comprising:
providing a first ply having a No. 1 surface and a No. 2 surface;
heating the first ply;
bending the first ply into a predetermined shape;
providing a second ply having a No. 3 surface and a No. 4 surface;
painting at least a portion of the No. 2 surface, the No. 3 surface, or the No. 4 surface to yield a painted portion;
applying a burn-off temporary layer over at least a portion of the painted portion;
heating the second ply;
bending the second ply into the predetermined shape;
burning-off the burn-off temporary layer;
providing an interlayer in between the first ply and second ply;
heating and squeezing the first ply, the second ply and the interlayer together under a vacuum to remove any air trapped between the first ply and the second ply thereby forming the article; and
cooling the article.

2. The method of claim 1, wherein the heating is performed at a temperature of 550°C to 700°C.

3. The method of claim 1, wherein any of the heating steps do not cause the surface to have a color change (DECMC) of more than 3 units compared to a color of the surface before the heating.

4. The method of claim 1, wherein the burn-off temporary layer comprises one or more of a wax, an organic oil, a (meth)acrylate, a polyolefin, a polyester, a polycarbonate, a polyether, and a combination thereof.

5. The method of claim 1, wherein the burn-off temporary layer comprises one or more of polylactic acid (PLA), polyethylene carbonate (PEC), polypropylene carbonate (PPC), polycaprolactone, polyoxymethylene, polyethylene, polypropylene, an aqueous polyurethane, a polyurethane formed from a two component system, an epoxy functional polymeric material, and a combination thereof.

6. The method of claim 1, wherein the burn-off temporary layer comprises one or more of plasticizers, crosslinkers, viscosity modifiers, corrosion inhibitors, infrared (IR) absorbers, adhesion modifiers, UV absorbers, pigments, surfactants, hydrophobic agents, and a combination thereof.

7. The method of claim 1, wherein the burn-off temporary layer comprises a thickness of at least 10 nm and at most 5,000 µm.

8. The method of claim 1, wherein the burning-off step is performed at a temperature of at most 1000°C without substantial damage to the second ply.

9. The method of claim 1, wherein the article further comprises a functional coating positioned on the No. 2 surface or the No. 3 surface.

10. The method of claim 9, wherein the functional coating is positioned between the surface and a second burn-off temporary layer.

11. The method of claim 1, wherein the article has a thickness of about 0.25 mm to about 1.0 mm.

12. The method of claim 1, wherein the article is a windshield.

13. The method of claim 1, wherein the article is a sidelight.

14. The method of claim 1, further comprising:
positioning a mask over at least a portion of one of the No. 2 surface, the No. 3 surface, and the No. 4 surface;
positioning a functional coating over the mask; and
applying a second burn-off temporary layer over the functional coating.

15. The method of claim 14, wherein the mask is a burn-off mask.
